# EUROPEAN PATENT APPLICATION

(11) **EP 3 851 962 A1**
(43) Date of publication of application: **21.07.2021**
(21) Application number: 20151890.9
(22) Date of filing: 15.01.2020
(51) Int. Cl.: G06F 9/50, G05D 1/00, G01S 13/00, G01S 15/00, G01S 17/00, B60W 60/00, G06K 9/00

(54) **METHOD, COMPUTER PROGRAM AND APPARATUS FOR ASSIGNING SENSORY RESOURCES OF AN AUTONOMOUSLY OPERATED SYSTEM**

(71) Applicant: Bayerische Motoren Werke Aktiengesellschaft, 80809 München (DE)
(72) Inventor: Eichhorn, Julian, Menlo Park, 94025 (US); Mahler, Grant, Sunnyvale, 94089 (US)

(57) **Abstract**

Embodiments of the present disclosure relate to a method, to a computer program and to an apparatus for assigning sensory resources of an autonomously operated system. The method comprises obtaining sensor data of one of more perception sensors of the autonomously operated system. The sensor data comprises data relating to a perception of an environment of the autonomously operated system. The method comprises detecting an incident of interest within the sensor data. The incident of interest being an incident that warrants a more thorough analysis through (i.e. using) one or more sensory resources of the autonomously operated system. The method comprises temporarily assigning the one or more sensory resources to the analysis of the incident of interest.

## Description

### Field

Examples relate to a method, to a computer program and to an apparatus for assigning sensory resources of a autonomously operated system.

### Background

Automated vehicles use different sensors to integrate their highly dynamic physical environment into an environmental model in order to navigate in it safely. For example, these sensors can be based on radar, lidar, sonar, or may be cameras in the visible or infrared spectrum.

Computational resources in automated cars are expensive and therefore limited. Therefore, much of the sensor data being collected remains unused, as it is either not processed, or as only a fraction of its information content is being extracted.

### Summary

There may be a desire for an improved concept for the processing of sensor data.

This desire is addressed by the subject-matter of the independent claims.

Embodiments of the present disclosure are based on the finding that it may be considered inefficient to waste computational resources on areas that are less relevant and to have a lack of computational resources on areas or situations or objects that can be temporarily important for building a correct and safe environmental model, which lateral and longitudinal vehicular guidance is based on. Embodiments of the present disclosure thus provide an approach for temporarily re-assigning sensory resources, such as computational resources of the vehicle and/or the use of a sensor in a specific direction, based on an incident being detected within sensor data. If an incident detected within the sensor data warrants an investigation, the appropriate sensory resources are temporarily reassigned to react to the detection of the incident, and to achieve an analysis of the incident with a low latency, thereby enabling a timely analysis of time-critical incidents. Furthermore, embodiments provide the application of the concept with different kinds of autonomously operated systems. In the following, examples that relate to autonomous vehicles can also be applied to other autonomously operated systems.

Embodiments of the present disclosure provide a method for assigning sensory resources of a autonomously operated system. The method comprises obtaining sensor data of one of more perception sensors of the autonomously operated system. The sensor data comprises data relating to a perception of an environment of the autonomously operated system. The method comprises detecting an incident of interest within the sensor data. The incident of interest being an incident that warrants a more thorough analysis through (i.e. using) one or more sensory resources of the autonomously operated system. The method comprises temporarily assigning the one or more sensory resources to the analysis of the incident of interest. By detecting the incident of interest within the sensor data, the analysis of the incident using the one or more sensory resources can be triggered. By temporarily assigning the one or more sensor resourcing to the analysis of the incident of interest, the incident of interest can be analyzed in a timely manner.

For example, the method may comprise resuming a previous assignment of the one or more sensory resources after the analysis of the incident of interest. This may return the system to a "normal" operation state.

In some embodiments, the one or more sensory resources are assigned to analyze the sensor data that has contained the incident of interest. This may provide an analysis of the incident itself, or of an environment of the incident.

Alternatively or additionally, the one or more sensory resources may be assigned to generate and/or analyze additional sensor data. The additional sensor data may have originated after the detection of the incident of interest. In other words, the detection of the incident of interest may trigger the generation and/or analysis of sensor data that is generated after the incident, e.g. in order to deal with the incident. For example, if a sound of a siren is detected within the sensor data, the one or more sensory resources may be assigned to scan the sensor data for the rescue vehicle using the siren, e.g. in order to make way for the rescue vehicle.

For example, if the incident of interest has been detected in the sensor data of a perception sensor of the one or more perception sensors, the one or more sensory resources may be assigned to generate and/or analyze additional sensor data of the perception sensor. In other words, sensor data of the same perception sensor may be generated and/or analyzed in order to gain more insights on the incident, or in order to learn how the incident develops.

Alternatively or additionally, the incident of interest may have been detected in the sensor data of a perception sensor of the one or more perception sensors, and the one or more sensory resources may be assigned to generate and/or analyze additional sensor data of a further perception sensor being different from the perception sensor. Thus, sensor data of other sensors may be used to gain more information about the incident.

For example, the method may comprise determining a direction of the incident of interest relative to the autonomously operated system. The additional sensor data may be generated and/or analyzed based on the direction of the incident of interest relative to the autonomously operated system. This may be used to limit the scope of the sensor data being analyzed in the aftermath of the detection of the incident of interest.

In some embodiments, the method may comprise detecting an object within the sensor data. The incident of interest may be related to the detected object. Objects may often trigger an incident of interest, for example, if the object is unresolvable, unclassifiable, complex, or if the object performs an action that is relevant for the operation of the autonomously operated system.

Alternatively or additionally, the method may comprise detecting a situation based on the sensor data. The incident of interest may be related to the detected situation. For example, in a situation involving a rescue vehicle, e.g. at the site of an accident, an incident of interest may be triggered, which may lead to a more thorough analysis of the site of the accident, e.g. in order to make way for the rescue vehicle, or to avoid debris being spread over the street.

Alternatively or additionally, the method may comprise detecting a location based on the sensor data. The incident of interest may be related to the detected location. For example, if autonomously operated system is an autonomously operated vehicle, and the vehicle reaches a location with a tendency for icing, the sensory resources may be employed to detect icy patches of the road, or at complex intersections, the rear sensors may be preferentially employed to avoid rear-end collisions.

For example, the incident of interest may be related to one of an unresolvable object, an unclassifiable object, a complex object, a pre-defined object, an object with a pre-defined behavior, a traffic situation, and a location. Such incidents may warrant a more thorough analysis.

The sensory resources may relate to both the computational resources required for processing the sensor data or additional sensor data, and to the sensors themselves. Accordingly, the one or more sensory resources may comprise one of more elements of the group of a computational resource for analyzing sensor data, a resolution of an analysis of sensor data, a resolution of a perception sensor, and a directionality of a perception sensor. The one or more perception sensors may comprise one or more of a distance sensor, an ultrasound-based sensor, a radar sensor, a lidar sensor, a camera, and a microphone. Embodiments may thus be used in a multitude of scenarios, and in order to more thoroughly analyze a multitude of different incidents.

Embodiments of the present disclosure further provide a computer program having a program code for performing the method, when the computer program is executed on a computer, a processor, or a programmable hardware component.

Embodiments of the present disclosure further provide an apparatus for assigning sensory resources of an autonomously operated system. The apparatus comprises an interface. The apparatus comprises a processing module configured to obtain sensor data of one of more perception sensors of the autonomously operated system. The sensor data comprises data relating to a perception of an environment of the autonomously operated system. The processing module is configured to detect an incident of interest within the sensor data. The incident of interest is an incident that warrants a more thorough analysis through one or more sensory resources of the autonomously operated system. The processing module is configured to temporarily assign the one or more sensory resources to the analysis of the incident of interest. Embodiments of the present disclosure further provide an autonomously operated system comprising the apparatus.

### Brief description of the Figures

Some examples of apparatuses and/or methods will be described in the following by way of example only, and with reference to the accompanying figures, in which
- Figs. 1a and 1b: show flow diagrams of embodiments of a method for assigning sensory resources of a autonomously operated system;
- Fig. 1c: shows a block diagram of an apparatus for assigning sensory resources of a autonomously operated system;
- Fig. 2: shows a schematic diagram of an autonomously operated vehicle comprising perception sensors; and
- Fig. 3: shows a flow diagram of another embodiment of a method for assigning sensory resources of a autonomously operated system.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

At least one embodiments of the present disclosure relate to computational resource shifting for (highly) automated driving. Automated vehicles, which are an example for autonomously operated systems, often use different sensors to integrate their highly dynamic physical environment into an environmental model in order to navigate in it safely. These sensors can be based on RADAR (radio detection and ranging), LIDAR (light detection and ranging), SONAR (sound navigation ranging) and cameras in the visible or IR spectrum. In some embodiments, also a passive acoustic modality may be used, to also "hear" the environment.

Computational resources in automated cars are expensive and therefore limited. Embodiments of the present disclosure may thus dynamically and temporarily shift computational resources to areas of interest (i.e. incidents of interest). For example, these areas can be areas or objects that are unresolvable, unclassifiable, complex, specific objects, objects with specific behavior, specific situations and/or locations etc.

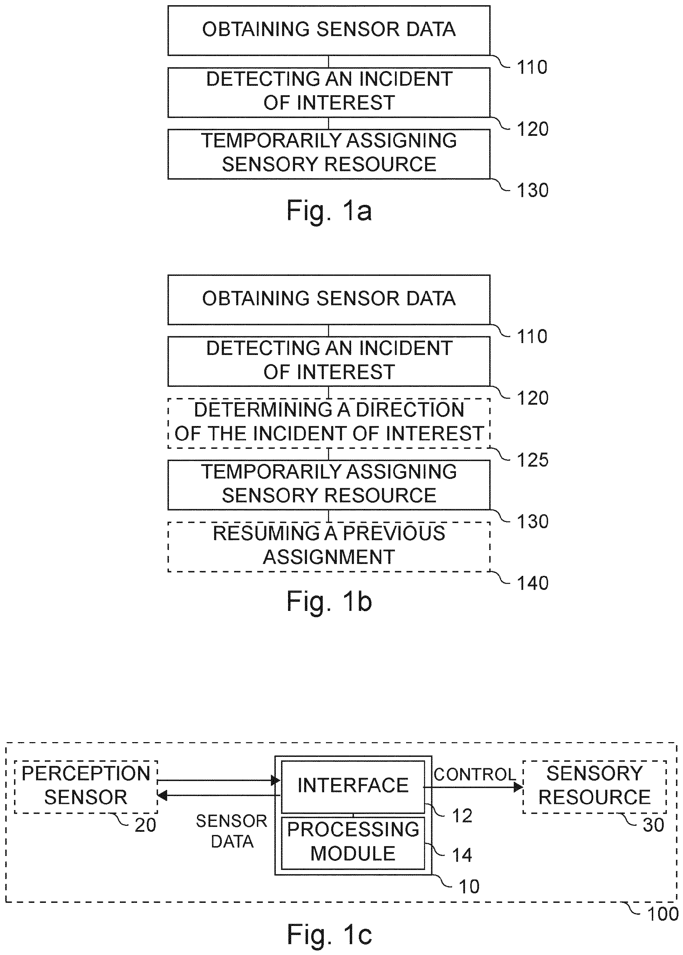

Figs. 1a and 1b show flow diagrams of embodiments of a (computer-implemented) method for assigning sensory resources of a autonomously operated system. The method comprises obtaining 110 sensor data of one of more perception sensors of the autonomously operated system. The sensor data comprises data relating to a perception of an environment of the autonomously operated system. The method comprises detecting 120 an incident of interest within the sensor data. The incident of interest is an incident that warrants a more thorough analysis through one or more sensory resources of the autonomously operated system. The method comprises temporarily 130 assigning the one or more sensory resources to the analysis of the incident of interest. For example, the method may be executed by the autonomously operated system, e.g. by an apparatus 10 of the autonomously operated system. In general, the autonomously operated system may be an autonomous system with (perception) sensors and actors, like e.g. a robot or an automated vehicle. For example, the autonomously operated system may be an (autonomously or semi-autonomously operated) vehicle 100. For example, the vehicle 100 may be a land vehicle, a road vehicle, a car, an automobile, an off-road vehicle, a motor vehicle, a truck or a lorry. In this context, the term semi-autonomously operated vehicle is chosen for vehicles that rely on occasional input/intervention from a driver of the vehicle (level 3 of SAE standard J3016), and the term autonomously operated vehicle is chosen for vehicles that can be operated without (any) input from a driver (levels 4 and 5 of SAE J3016).

Fig. 1c shows a block diagram of a (corresponding) apparatus 10 for assigning sensory resources of a autonomously operated system 100. The apparatus 10 comprises an interface 12. The apparatus 10 comprises a processing module 14, which is coupled to the interface 12. The processing module 14 may be configured to execute the method Figs. 1a and/or 1b. For example, the processing module 14 is configured to obtain sensor data of one of more perception sensors 20 (20a-20c) of the autonomously operated system. The sensor data comprises data relating to a perception of an environment of the autonomously operated system. The processing module 14 is configured to detect an incident of interest within the sensor data. The incident of interest is an incident that warrants a more thorough analysis through one or more sensory resources 30 of the autonomously operated system. The processing module 14 is configured to temporarily assign the one or more sensory resources to the analysis of the incident of interest. Fig. 1c further shows a autonomously operated system 100 comprising the apparatus 10.

Embodiments of the present disclosure relate to a method, an apparatus and a computer program for assigning sensory resources of a autonomously operated system. The term "sensory resources of the autonomously operated system" implies two properties of the sensory resources - for one, they relate to the generation and processing of sensor data, and they are located within the autonomously operated system. More precisely, the term "sensory resources" refers to resources of the autonomously operated system that relate to the generation and processing of sensor data. On the one hand, these are the sensors of the autonomously operated system themselves, more precisely the perception sensors. On the other hand, these are the computational resources that are used for processing the sensor data generated by the perception sensors. In other words, the one or more sensory resources may comprise a computational resource (e.g. a computer, a processor, the processing module 14 etc.) for analyzing sensor data and/or (the) one or more perception sensors. More specifically, perception sensors of a autonomously operated system are often continuously in use. The sensory resource, in this case, may relate to the usage of the perception sensor, such as a directionality of a perception sensor (e.g. to direct a camera at a specific point), a resolution of a perception sensor (e.g. to select a higher resolution of the perception sensor in order to get a more detailed resolution of one of the perception sensors), and a resolution or quality of the analysis (e.g. to increase an amount of detail that can be gained from the analysis). Accordingly, the one or more sensory resource may comprise one of more elements of the group of a computational resource for analyzing sensor data, a resolution of an analysis of sensor data, a resolution of a perception sensor, and a directionality of a perception sensor.

The method comprises obtaining 110 sensor data of one of more perception sensors of the autonomously operated system. For example, the sensor data may be sensor data that is generated by the one or more perception sensors. The sensor data may be received directly from the one or more perception sensors, e.g. via a communication bus or network of the autonomously operated system. Alternatively, the sensor data may be read out from a memory of the autonomously operated system. In both cases, the sensor data may be obtained in a digital format, e.g. as a stream or file of digital bits representing the sensor readings of the one or more perception sensors. The sensor data comprises data relating to a perception of an environment of the autonomously operated system. In other words, the sensor data may model the environment of the autonomously operated system, as perceived by the one or more perception sensors of the autonomously operated system. The sensor data may comprise sensor data of a plurality of different perception sensors. Accordingly, the sensor data may comprise data relating to an environment of the autonomously operated system, as perceived by a plurality of different perception sensors. For example, the one or more perception sensors may comprise one or more elements of a distance sensor, a Time-of-Flight-sensor (ToF), an ultrasound-based sensor (i.e. an active acoustic sensor), a sonar sensor, a radar sensor, a lidar sensor, a camera (e.g. a two-dimensional camera, a three-dimensional camera, a visible light camera or an infrared light camera), and a microphone (i.e. a passive acoustic sensor). Accordingly, the sensor data may comprise one or more elements of distance sensor data, ToF sensor data, ultrasound-based sensor data, sonar sensor data, radar sensor data, lidar sensor data, camera sensor data, and acoustic sensor data. In some embodiments, the sensor data may also comprise information on a position of the autonomously operated system (e.g. from a positioning sensor) and/or mapping information.

In general, the object detection and classification are performed on the sensor data, and the result of the object detection and classification are integrated into a model of the environment of the autonomously operated system. In other words, the method may comprise updating the model of the environment of the autonomously operated system based on the sensor data, e.g. based on the objects detected within the sensor data. For incidents of interest, the updating of the environmental model or the integration of the result of the analysis into the environmental model may be deferred until after the analysis of the incident of interest.

Using the sensor data, the "incident of interest" is detected within the sensor data. This detection may be based on the object detection and classification performed on the sensor data. The term "incident of interest" is broad, as it may encompass a multitude of different scenarios. In many scenarios, the "incident of interest" is an "object of interest" that is perceivable through the sensor data. Accordingly, the method may comprise detecting 120 an object within the sensor data, wherein the incident of interest is related to the detected object. In this case, the object of interest is an object that warrants a more thorough analysis through one or more sensory resources of the autonomously operated system. This criterion fits a number of different cases - for example, unresolvable objects (i.e. objects that are not clearly perceivable within the sensor data), unclassifiable objects (i.e. objects that are clearly perceived, but cannot be assigned to one of a plurality of pre-defined categories, such as "pedestrian", "cyclist", "vehicle", "traffic sign", "traffic lights" etc.) or complex objects (i.e. objects that have features that are only perceivable in a more detailed analysis). Moreover, this criterion fits objects that are pre-defined to trigger a more detailed analysis, e.g. pre-defined objects (e.g. children at the edge of a road, cyclists, animals) or pre-defined objects that tend to risky, erratic or chaotic behaviour (e.g. a pedestrian using a smartphone, a cyclist swaying on the road, children crossing the road).

In some cases, the incident of interest relates to a specific situation or a location, or a specific situation or location may make an otherwise insignificant incident an incident of interest. For example, a situation may be an accident, where a perception sensor, such as a motion sensor, detects the accident through a motion of the autonomously operated system. Another situation is a situation, in which a rescue vehicle approaches the autonomously operated system and is perceived through a microphone of the autonomously operated system. Consequently, the method may comprise detecting 120 a situation based on the sensor data, the incident of interest being related to the detected situation. In some cases, the incident of interest may also relate to a location of interest, such as a complex intersection, which is detected based on the position sensor data and based on the mapping data. In other words, the method may comprise detecting 120 a location based on the sensor data, the incident of interest being related to the detected location. In many cases, however, the location and/or the situation turn otherwise insignificant objects into objects of interest, e.g. children (object) playing near the curb of the road (location), or pedestrian (object), using a smartphone (situation) near the road (location). In other words, the incident of interest may relate to an object at a specific location or in a specific situation.

For example, if pedestrians / cyclists are detected (e.g. in visual sensor data), (visual) computational resources may be shifted towards their facial expression, gestures, postures etc. For example, if traffic signs / signals are detected (e.g. in visual sensor data), (visual) computational resources may be shifted to their content / status. For example, if engine sounds, ambulance sounds, bicycle sounds, speech and speech semantics, horns alarm signals etc. are detected (in acoustic/microphone sensor data), (also other sensory and computational) resources may be shifted towards them. For example, if objects with critical speed and / or direction are detected (e.g. within doppler-radar sensor data), (also other sensory and computational) resources may be shifted towards them to minimize collision risk. For example, if difficult intersections and / or highway ramps are approached (e.g. based on their location), general resources may be shifted to specific areas (like approaching rear traffic etc.). For example, if difficult visual conditions would limit the visual modality (in a specific context), resources can be shifted towards other modalities.

In conclusion, the incident of interest may be related to one of an unresolvable object, an unclassifiable object, a complex object, a pre-defined object, an object with a pre-defined behavior, a traffic situation, and a location.

To sum it up, there are a multitude of possible incidents of interest, which are all joined by the desire or requirement of a more thorough analysis of the incident of interest. These incidents of interest relate to an object, a situation and/or a location - once such an object, situation and/or location is detected, and incident of interest may be determined, and a subsequent temporary reassignment of the sensory resources may be performed. In other words, in order to detect the incident of interest within the sensor data, the respective object, situation and/or location is detected within the sensor data and identified as relating to an incident of interest, triggering the detection of the incident of interest. From an implementation perspective, the method may comprise identifying one of a plurality of pre-defined triggers for an incident of interest within the sensor data, and detecting the incident of interest after identifying one of the plurality of pre-defined triggers within the sensor data. For example, the plurality or pre-defined triggers may relate to the objects, situations and/or locations identified above. For example, the plurality of pre-defined triggers may comprise one or more elements of the group of a trigger relating to unresolvable objects, a trigger relating to unclassifiable objects, a trigger relating to complex objects, one or more triggers relating to pre-defined objects, one or more triggers relating to objects with a pre-defined behaviors, one or more triggers relating to traffic situations, and one or more triggers relating to a location.

The method comprises temporarily 130 assigning the one or more sensory resources to the analysis of the incident of interest. The focus here is on the temporal aspect - the one or more sensory resources are merely reassigned for the analysis of the incident of interest, and are then returned to their previous purpose. In other words, the method may comprise resuming 140 a previous assignment of the one or more sensory resources after the analysis of the incident of interest. Accordingly, the method may comprise switching from a first sensor data analysis state to a second sensor data analysis state in response to the detection of the object of interest. The method may further comprise returning to the first sensor data analysis state after finishing the analysis of the incident of interest. In the first sensor data analysis state, the sensor data may be analyzed according to a default analysis preset, the default analysis preset providing a balanced processing and generation of the sensor data. For example, the first sensor data analysis state may be used in a "normal" operation of the autonomously operated system. Once an incident of interest is detected, the second sensor data analysis state may be entered. In the second sensor data analysis state, the processing and generation of the sensor data may focus on the incident of interest, and other sensor data analysis may be delayed or performed at a lower quality. For example, in the second sensor data analysis state, a portion of the computational resources of the autonomously operated system may be reserved for the analysis related to the incident of interest. Additionally, the generation of the sensor data may be influenced as well. For example, the in the second sensor data analysis state, the generation of sensor data may be performed with a higher quality or resolution for sensor data relating to the incident of interest, and/or a directionality of a perception sensor may be adjusted for the generation of sensor data relating to the incident of interest.

In embodiments, different cases may be distinguished - the analysis of the sensor data that is generated up to the point at which the incident of interest is detected (cases 1 and 2), and the analysis of additional sensor data that is generated after the point at which the incident of interest is detected (in the following denoted additional sensor data, cases 3 and 4). Additionally, the analysis of sensor data may relate to sensor data of the perception sensor that has generated the sensor data in which the incident of interest has been detected (cases 1 and 3), or to sensor data of other perception sensors (cases 2 and 4).

In other words, one or more sensory resources are assigned 130 to analyze the sensor data that has contained the incident of interest, e.g. sensor data that is generated before the detection of the incident of interest. This sensor data may contain one or both of the sensor data of the perception sensor that has generated the sensor data in which the incident of interest has been detected (case 1), and the sensor data of other perception sensors (case 2).

Additionally or alternatively, the one or more sensory resources may be assigned to analyze the additional sensor data, i.e. the sensor data that has been generated after the detection of the incident of interest. In other words, the one or more sensory resources may be assigned 130 to generate and/or analyze additional sensor data. The additional sensor data may have originated after the detection of the incident of interest. This additional sensor data may originate from the same sensor. In more formal terms, the incident of interest may have been detected in the sensor data of a perception sensor of the one or more perception sensors. The one or more sensory resources may be assigned 130 to generate and/or analyze additional sensor data of the (same) perception sensor (i.e. said perception sensors, case 3). Additionally or alternatively, the additional sensor data may originate from a different perception sensors. In other words, the one or more sensory resources may be assigned to generate and/or analyze additional sensor data of a further perception sensor being different from the perception sensor (case 4).

To give some examples - an example for case 1 is a case, where a pedestrian using a smartphone is detected within the sensor data, and the sensory resources are used to analyze the same sensor data again in order to determine a viewing direction of the pedestrian, to determine whether the pedestrian is aware of the approaching autonomously operated system/vehicle. An example for case 2 is a case, where a small entity is detected at the side of the road using a lidar sensor, and where simultaneously recorded camera sensor data is used to determine whether the small entity is a child or an animal, and whether the small entity is looking or moving towards the road. An example for case 3 is a case, where a pedestrian using a smartphone is detected within the sensor data, and the sensor data of the same perception sensor is analyzed to determine whether the pedestrian is stepping on the road without looking, or whether the pedestrian is aware of the traffic. An example for case 4 is a case, where a siren of an emergency vehicle is detected, and where visual sensors are used to detect the emergency vehicle as soon as it is in visual distance.

To aid in this analysis, the incident of interest may be used as a point of reference to focus the generation and analysis of the sensor data into a direction of the incident of interest. In other words, once an incident of interest is detected, it may be beneficial to generate and/or analyze sensor data that pertains to the same general direction of the incident of interest. Accordingly, the method may comprise determining 125 a direction of the incident of interest relative to the autonomously operated system. For example, if the incident of interest is related to an object, the direction of the incident of interest may be towards a position of the object. If the incident of interest is related to a traffic situation, the direction of the incident of interest may be towards a position of the traffic situation, if the traffic situation is localizable (e.g. in case of an accident). If the incident of interest is related to a location, the direction of the incident of interest may be towards the location. The sensor data may be evaluated to determine the direction of the incident of interest. For example, if the object interest is detected within visual or three-dimensional sensor data, the position of the object of interest may be determined within the visual or three-dimensional sensor data, and used to determine the direction of the incident of interest. If the object of interest is detected within acoustic sensor data, the acoustic sensor data of multiple microphones may be analyzed to determine the direction of the incident of interest through a comparison of audio volume and delay. The additional sensor data may be generated and/or analyzed based on the direction of the incident of interest relative to the autonomously operated system. In other words, the additional sensor data that is generated and/or analyzed may be directed towards the (general) direction of the incident of interest. Sensor data of other directions might be discarded in the more thorough analysis of the incident of interest.

After analyzing the sensor data pertaining to the incident of analysis, the result of the analysis may be provided to one or more further systems of the autonomously operated system, e.g. to an autonomous driving system of the autonomously operated system, or to an emergency braking system of the autonomously operated system. This may be performed through the environmental model. In other words, the method may comprise integrating the result of the analysis of the incident of interest into the environmental model (e.g. by updating the environmental model based on the result of the analysis). From there, the one or more further systems may use the gained insights. Alternatively or additionally, the one or more further systems may be directly supplied with, or triggered based on, the analysis of the incident of interest. For example, a control signal may be provided to the one or more further systems of the autonomously operated system, the control signal comprising information on a result of the analysis and/or one or more control instructions that are derived from the analysis of the incident of interest. In general, the result of the analysis, e.g. the control signal, may be used for highly automated driving of the autonomously operated system, e.g. as part of the environmental model.

The interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information. For example, the interface 12 may be configured to communicate with the one or more perception sensors and/or with the one or more sensory resources via a communication bus or network of the autonomously operated system.

In embodiments the processing module 14 may be implemented using one or more processing units, one or more processing devices, any means for processing, such as a processor, a computer or a programmable hardware component being operable with accordingly adapted software. In other words, the described function of the processing module 14 may as well be implemented in software, which is then executed on one or more programmable hardware components. Such hardware components may comprise a general-purpose processor, a Digital Signal Processor (DSP), a micro-controller, etc.

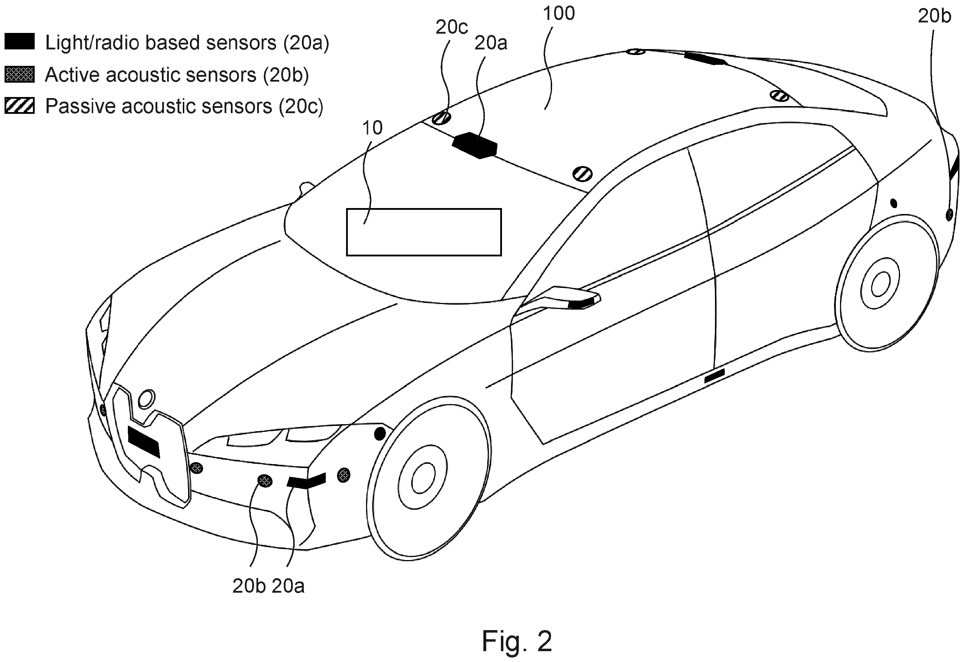

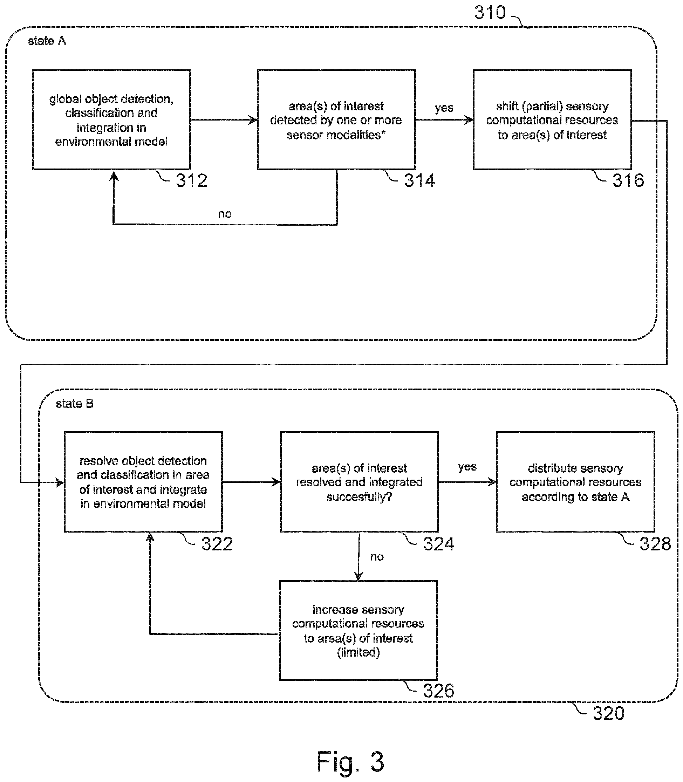

More details and aspects of the method, apparatus, computer program and autonomously operated system are mentioned in connection with the proposed concept or one or more examples described above or below (e.g. Fig. 2 or 3). The method, apparatus, computer program and autonomously operated system may comprise one or more additional optional features corresponding to one or more aspects of the proposed concept or one or more examples described above or below.

Fig. 2 shows a schematic diagram of a vehicle comprising perception sensors according to an embodiment. For example, the vehicle may be an autonomously operated system introduced in connection with Figs. 1a-1c. The vehicle 100 of Fig. 2 comprises light/radio based perception sensor systems 20a, e.g. LIDAR sensors, RADAR sensors and/or cameras, which are arranged at the roof of the vehicle (front and back), at the corners of the vehicle, at the side mirrors, at the sides, and at the radiator grille. The vehicle 100 of Fig. 2 further comprises active acoustic perception sensors 20b, such as SONAR sensors, which are located at the front and back of the vehicle, and at the sides of the vehicle towards the front or back of the vehicle. The vehicle 100 of Fig. 2 further comprises passive acoustic perception sensors 20c, such as microphones or microphone arrays, to detect engine sounds, ambulance sounds, bicycle sounds, speech and speech semantics, horns, alarm signals etc. The passive acoustic sensors 20c are arranged at the four corners of the roof. The analysis of the sensor data may be performed by a computer (which controls the lateral and longitudinal vehicle guidance of the vehicle) 10, which may be implemented by the apparatus 10 of Fig. 1c. For example, the vehicle 100 may be an embodiment of the autonomously operated system 100 shown in Fig. 1c.

More details and aspects of the vehicle are mentioned in connection with the proposed concept or one or more examples described above or below (e.g. Fig. 1a to 1c, 3). The vehicle may comprise one or more additional optional features corresponding to one or more aspects of the proposed concept or one or more examples described above or below.

Fig. 3 shows a flow diagram of another embodiment of a method for assigning sensory resources of a autonomously operated system. In the diagram of Fig. 3, the analysis of the sensor data switches from a first state A 310 to a second state B 320. In the first state 310, global object detection, classification and integration in the environmental model is performed 312. A 314 detection of area(s) of interest is performed on one or more sensor modalities. If an area of interest is detected, sensory computational resources may be (partially) shifted to area(s) of interest 316 (to reach state B 320), if not, the global object detection etc. 310 may be resumed. In state B 320, the object detection and classification may be resolved in the area of interest and the results may be integrated in the environmental model 322. If 324 the area(s) of interest are resolved and integrated successfully, the sensory computational resources may be distributed 328 according to state A (and state A may be resumed), if not, the sensory computational resources may be increased to area(s) of interest 326, e.g. for a limited time.

More details and aspects of the method are mentioned in connection with the proposed concept or one or more examples described above or below (e.g. Fig. 1a to 2). The autonomously operated system may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

### Reference Signs

- 10: Apparatus
- 12: Interface
- 14: Processing module
- 20: Perception sensors
- 20a: Light/radio-based perception sensors
- 20b: Active acoustic perception sensors
- 20c: Passive acoustic perception sensors
- 30: Sensory resources
- 100: Autonomously operated system
- 110: Obtaining sensor data
- 120: Detecting an incident of interest
- 125: Determining a direction of the incident of interest
- 130: Temporarily assigning a sensory resource
- 140: Resuming a previous assignment
- 310: State A
- 312: Global object detection, classification and integration
- 314: Detection of area of interest
- 316: Shift sensory computational resources to area of interest
- 320: State B
- 322: Resolve object detection and classification in area of interest
- 324: Are area(s) of interest resolved and integrated?
- 326: Increase sensory computational resources to area(s) of interest
- 328: Distribute sensory computational resources according to state A

## Claims

1. A method for assigning sensory resources of an autonomously operated system, the method comprising:
Obtaining (110) sensor data of one of more perception sensors of the autonomously system, the sensor data comprising data relating to a perception of an environment of the autonomous operating system;
Detecting (120) an incident of interest within the sensor data, the incident of interest being an incident that warrants a more thorough analysis through one or more sensory resources of the autonomously operated system; and
Temporarily (130) assigning the one or more sensory resources to the analysis of the incident of interest.

2. The method according to claim 1, comprising resuming (140) a previous assignment of the one or more sensory resources after the analysis of the incident of interest.

3. The method according to one of the claims 1 or 2, wherein one or more sensory resources are assigned (130) to analyze the sensor data that has contained the incident of interest.

4. The method according to one of the claims 1 to 3, wherein the one or more sensory resources are assigned (130) to generate and/or analyze additional sensor data, the additional sensor data having originated after the detection of the incident of interest.

5. The method according to claim 4, wherein the incident of interest has been detected in the sensor data of a perception sensor of the one or more perception sensors, wherein the one or more sensory resources are assigned (130) to generate and/or analyze additional sensor data of the perception sensor.

6. The method according to one of the claims 4 or 5, wherein the incident of interest has been detected (120) in the sensor data of a perception sensor of the one or more perception sensors, wherein the one or more sensory resources are assigned to generate and/or analyze additional sensor data of a further perception sensor being different from the perception sensor.

7. The method according to one of the claims 4 to 6, comprising determining (125) a direction of the incident of interest relative to the autonomously operated system, wherein the additional sensor data is generated and/or analyzed based on the direction of the incident of interest relative to the autonomously operated system.

8. The method according to one of the claims 1 to 7, comprising detecting (120) an object within the sensor data, wherein the incident of interest is related to the detected obj ect.

9. The method according to one of the claims 1 to 8, comprising detecting (120) a situation based on the sensor data, wherein the incident of interest is related to the detected situation.

10. The method according to one of the claims 1 to 9, comprising detecting (120) a location based on the sensor data, wherein the incident of interest is related to the detected location.

11. The method according to one of the claims 1 to 10, wherein the incident of interest is related to one of an unresolvable object, an unclassifiable object, a complex object, a pre-defined object, an object with a pre-defined behavior, a traffic situation, and a location.

12. The method according to one of the claims 1 to 11, wherein the one or more sensory resources comprise one of more elements of the group of a computational resource for analyzing sensor data, a resolution of an analysis of sensor data, a resolution of a perception sensor, and a directionality of a perception sensor,
and/or wherein the one or more perception sensors comprise one or more of a distance sensor, an ultrasound-based sensor, a radar sensor, a lidar sensor, a camera, and a microphone.

13. A computer program having a program code for performing the method of one of the claims 1 to 12, when the computer program is executed on a computer, a processor, or a programmable hardware component.

14. An apparatus (10) for assigning sensory resources of autonomously operated system(100), the apparatus comprising:
an interface (12); and
a processing module (14) configured to:
obtain sensor data of one of more perception sensors (20) of the autonomously operated system, the sensor data comprising data relating to a perception of an environment of the autonomously operated system,
Detect an incident of interest within the sensor data, the incident of interest being an incident that warrants a more thorough analysis through one or more sensory resources (30) of the autonomously operated system, and
Temporarily assign the one or more sensory resources to the analysis of the incident of interest.

15. A autonomously operated system (100) comprising the apparatus (10) according to claim 14.
